# FASCICULE DE BREVET EUROPEEN

(11) **EP 2 374 022 B1**
(45) Date de publication et mention de la délivrance du brevet: **02.09.2015**
(21) Numéro de dépôt: 09796369.8
(22) Date de dépôt: 16.12.2009
(51) Int. Cl.: G01S 5/14, G01S 1/00, G01C 21/16

(54) **DISPOSITIF D'HYBRIDATION EN BOUCLE FERMEE INTEGRE PAR CONSTRUCTION**
DURCH KONSTRUKTION EINGEBAUTE INTEGRIERTE HYBRIDISIERUNGSEINRICHTUNG MIT GESCHLOSSENER SCHLEIFE
INTEGRATED CLOSED-LOOP HYBRIDIZATION DEVICE BUILT IN BY CONSTRUCTION

(30) Priorité: 17.12.2008 FR 0858721
(43) Date de publication de la demande: 12.10.2011
(73) Titulaire: Sagem Défense Sécurité, 92100 Boulogne-Billancourt (FR)
(72) Inventeur: VOURC'H, Sébastien, F-75015 Paris (FR); SZELEWA, Stanislas, F-75015 Paris (FR); LARTIGUE, Thibault, F-75015 Paris (FR)
(74) Mandataire: Regimbeau
(86) Numéro de dépôt international: PCT/EP2009/067338
(87) Numéro de publication internationale: WO 2010/070012

(56) Documents cités:
- EP-A- 1 801 539
- WO-A-2008/040658
- FR-A- 2 866 423

## Description

Le domaine de l'invention est celui des porteurs utilisant des informations fournies à la fois par une centrale inertielle et par un système de navigation par satellite, comme par exemple un système GPS.

L'invention concerne un dispositif d'hybridation en boucle fermée, et porte plus particulièrement sur l'élaboration de commande devant être appliquée à des fins de stabilisation au dispositif de calculs inertiels (plate-forme virtuelle) de la centrale inertielle et aux mesures inertielles qui en sont issues.

Les porteurs comme les aéronefs ou encore les bateaux disposent de nombreux systèmes de navigation. Parmi ces systèmes, on compte notamment un équipement hybride INS/GNSS (de l'anglo-saxon « Inertial Navigation System » et « Global Navigation Satellite System »).

Une centrale inertielle fournit des informations peu bruitées et précises à court terme. Cependant, sur le long terme, les performances en localisation d'une centrale inertielle se dégradent (plus ou moins vite en fonction de la qualité des capteurs, accéléromètres ou gyroscopes par exemple, et des traitements utilisés par la centrale). Si les informations acquises auprès d'un système de navigation par satellites sont quant à elles très peu susceptibles de dériver sur le long terme, elles sont cependant souvent bruitées et d'une précision variable. Par ailleurs, les mesures inertielles sont toujours disponibles alors que les informations GPS ne le sont pas ou sont susceptibles d'être leurrées et brouillées.

L'hybridation consiste à combiner les informations fournies par la centrale inertielle et les mesures fournies par le système de navigation par satellites pour obtenir des informations de position et de vitesse en tirant avantage des deux systèmes. Ainsi, la précision des mesures fournies par le récepteur GNSS permet de maîtriser la dérive inertielle et les mesures inertielles peu bruitées permettent de filtrer le bruit sur les mesures du récepteur GNSS.

Les systèmes de navigation modernes calculent des rayons de protection autour de la position calculée qui permettent de contenir l'erreur de position vraie à un risque d'intégrité donné, c'est ce qui définit l'intégrité d'un système.

Selon l'état de l'art, ces rayons de protection peuvent être calculés au moyen d'un banc de filtres de Kalman qui permet de se protéger contre l'apparition d'une panne simple.

Ces filtres réalisent l'hybridation entre les informations issues du système de navigation par satellite et celles issues de la centrale inertielle. Un des filtres du banc de filtres, désigné par le terme de filtre principal, utilise toutes les mesures GNSS constituées de pseudo-mesures et d'informations sur la qualité de celles-ci. Les autres filtres, dit secondaires, du banc de filtres ne font usage que d'une partie seulement des mesures GNSS disponibles. Si une panne survient au niveau d'une mesure satellite, celle-ci ne sera pas vue par le filtre secondaire ne recevant pas cette mesure : ce filtre secondaire restera donc non pollué.

L'utilisation d'un tel banc de filtres de Kalman dans le cadre d'une hybridation en boucle fermée (c'est-à-dire lorsque l'on souhaite appliquer directement les corrections calculées par le filtre de Kalman à la plateforme virtuelle) a par exemple été proposée par le document EP1801539 A. WO 2008/040658 propose un fonctionnement similaire.

Ce document prévoit de n'intégrer avantageusement qu'une seule plateforme virtuelle, et de mettre en oeuvre une détection de panne satellite afin de sélectionner le filtre de Kalman dont la sortie (vecteur de correction dans ce qui suit) sera appliquée (en tant que vecteur de stabilisation) à la plateforme virtuelle et aux mesures inertielles qui en sont issues.

Ainsi, ce document prévoit de sélectionner le filtre de Kalman principal lorsqu'aucune panne d'un des satellites n'est détectée, ou, lorsqu'une panne est détectée, de sélectionner le filtre de Kalman secondaire non affecté par la panne. Dans la mesure où les corrections proviennent ainsi d'un seul filtre (le vecteur de stabilisation des mesures inertielles étant ainsi une recopie du vecteur de correction estimé par le filtre de Kalman sélectionné) et où ce filtre n'est pas affecté par une panne satellite, on ne vient donc pas appliquer aux mesures inertielles des corrections erronées par propagation d'une information corrompue par une panne satellite.

Toutefois, l'architecture proposée dans ce document ne s'avère pas totalement satisfaisante. En effet, dans la mesure où les corrections sont issues d'un seul filtre, si l'on ne détecte pas une panne, ou si l'on exclut le mauvais satellite, la plate-forme virtuelle va être recalée avec une commande (vecteur de stabilisation) polluée par cette panne. Dans la mesure où ce document prévoit en outre que le calcul des pseudo-mesures estimées à priori soit réalisé à partir des informations délivrées par la plate-forme virtuelle, les pseudo-mesures utilisées par tous les filtres sont alors polluées.

Cette architecture ne garantit donc pas intrinsèquement que l'un des filtres de la banque ne sera pas pollué par la panne. Par ailleurs, la reconfiguration (recopie des données du filtre non pollué sur toute la banque de filtres) n'assure pas le retour à des mesures non polluées par la panne car le satellite exclu n'est peut-être pas celui qui contient la panne.

L'invention a pour objectif de pallier à ces inconvénients, et propose à cet effet selon un premier aspect, un dispositif d'hybridation comportant une plateforme virtuelle, un banc de filtres de Kalman estimant chacun un vecteur de correction dX0-dXn, le dispositif délivrant une sortie hybride correspondant à des mesures inertielles PPVI calculées par la plateforme virtuelle et corrigées par un vecteur de stabilisation dC, caractérisé en ce qu'il comporte un module d'élaboration de la correction configuré pour élaborer chacune des composantes dC[état] du vecteur de stabilisation en fonction de l'ensemble des composantes correspondantes dX0[état]-dXn[état] des vecteurs de correction dX0-dXn.

Certains aspects préférés, mais non limitatifs, de ce dispositif sont les suivants :
- le module d'élaboration de la correction est configuré, pour chaque composante du vecteur de stabilisation, de manière :
   ∘ à analyser le signe de l'ensemble des composantes correspondantes des vecteurs de correction ;
   ∘ lorsque l'ensemble de ces composantes correspondantes ne sont pas de même signe, à élaborer une composante de valeur nulle pour le vecteur de stabilisation ;
   ∘ lorsque l'ensemble de ces composantes correspondantes sont de même signe, à élaborer une composante de valeur non nulle pour le vecteur de stabilisation, déterminée en fonction de la valeur de chacune de ces composantes des vecteurs de correction.
- la valeur non nulle de la composante du vecteur de stabilisation correspond au minimum de l'ensemble des composantes correspondantes des vecteurs de correction lorsque l'ensemble de ces composantes correspondantes sont positives, et correspond au maximum de l'ensemble des composantes correspondantes des vecteurs de correction lorsque l'ensemble de ces composantes correspondantes sont négatives.
- la valeur non nulle de la composante du vecteur de stabilisation correspond à la moyenne des p plus petites composantes correspondantes des vecteurs de correction, prises en valeur absolue, et avec p par exemple égal à 2.
- le vecteur de stabilisation est appliqué à l'entrée de l'ensemble des filtres de la banque de filtres ;
- la sortie hybride est rebouclée à l'entrée de la plateforme virtuelle ;
- le banc de filtres de Kalman comprend un filtre de Kalman principal recevant les mesures des signaux émis par n satellites, et n filtres de Kalman secondaires recevant chacun les mesures des signaux émis par les N satellites à l'exclusion d'un satellite ;
- le dispositif comprend en outre un banc de sommateurs positionné en sortie de la banque de filtres pour ajouter à chaque vecteur de correction la sortie hybride.

Selon un second aspect, l'invention propose un procédé d'élaboration d'un vecteur de stabilisation destiné à corriger des mesures inertielles calculées par une plateforme virtuelle d'un dispositif d'hybridation, caractérisé en ce que le vecteur de stabilisation est élaboré composante par composante et en ce que chaque composante dC[état] du vecteur de stabilisation dC est élaborée en fonction de l'ensemble des composantes correspondantes dX0[état]-dXn[état] de vecteurs de correction (dX0-dXn) estimés par un banc de filtres de Kalman.

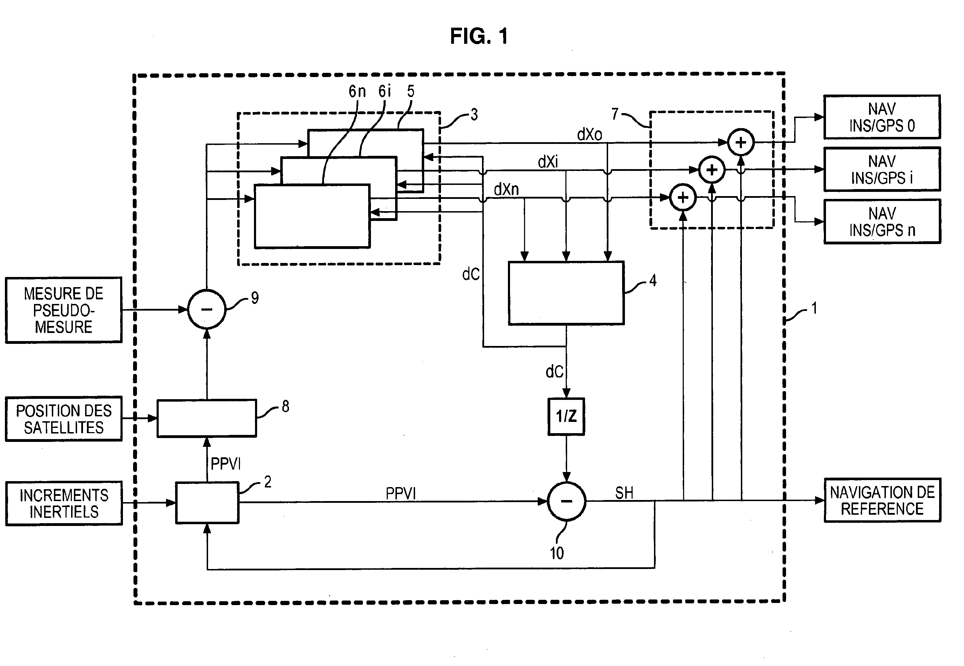

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels la figure 1 est un schéma illustrant un mode de réalisation possible d'un dispositif selon le premier aspect de l'invention.

En référence à la figure 1, on a représenté un dispositif d'hybridation 1 conforme à un mode de réalisation possible du premier aspect de l'invention, destiné à être embarqué au sein d'un porteur tel qu'un aéronef. Le dispositif d'hybridation 1 utilise des informations fournies par une centrale inertielle et par un système de navigation par satellites, et comprend une seule plateforme virtuelle 2 et un banc 3 de filtres de Kalman.

La plateforme virtuelle 2 reçoit des incréments inertiels provenant des capteurs (gyroscopes, accéléromètres) d'une centrale inertielle. Les incréments inertiels correspondent notamment à des incréments angulaires et à des incréments de vitesse. Des informations de navigation inertielle (comme les attitudes, le cap, la vitesse ou la position du porteur) sont calculées par la plateforme virtuelle à partir de ces incréments. Ces informations de navigation inertielle sont désignées mesures inertielles PPVI par la suite.

Ces mesures inertielles PPVI sont transmises à un dispositif de calcul des pseudo-distances estimées a priori 8 qui reçoit également des données sur la position des satellites. A partir d'une part des mesures inertielles et d'autres par des données sur la position des satellites, le dispositif de calcul des pseudo-distances estimées a priori 8 calcule les pseudo-distances a priori entre le porteur et les différents satellites visibles du porteur.

Le dispositif d'hybridation 1 reçoit également du système de navigation par satellite les pseudo-mesures entre le porteur et les différents satellites visibles. Il est alors possible de calculer, via un soustracteur 9, les écarts (appelées observations) entre les pseudo-mesures estimées a priori et les pseudo-mesures.

Le dispositif d'hybridation 1 comporte en outre un banc de filtres de Kalman étendus 3 réalisant l'hybridation entre les informations inertielles provenant de la centrale inertielle et les informations du système de navigation par satellite. Outre une fonction de fourniture d'informations statistiques sur les mesures en sortie, le rôle des filtres est de maintenir la plateforme virtuelle 2 dans un domaine de fonctionnement linéaire image de celui modélisé dans le filtre de Kalman en estimant chacun un vecteur de correction dX0-dXn (vecteur d'états du filtre de Kalman comportant en règle générale de l'ordre de 30 composantes).

De manière classiquement connue en soi, le banc de filtres 3 comporte plusieurs filtres de Kalman en parallèle. Un des filtres est appelé filtre de Kalman principal 5 : il reçoit toutes les observations. Les autres filtres 6i, 6n sont appelées filtres secondaires : ils ne reçoivent qu'une partie des observations, par exemple (n-1) observations parmi les n observations relatives aux n satellites visibles de sorte que le i-ème filtre de Kalman secondaire 6i considère les pseudo-mesures de tous les satellites sauf du i-ème.

On relèvera que le processus d'élaboration des observations décrit ci-dessus n'est pas commun à tous les filtres de la banque 3, mais est réalisé pour chacun des filtres. Ainsi, comme cela est représenté sur la figure 1, un dispositif de calcul des pseudo-distances a priori 8 et un soustracteur 9 sont présents pour chaque filtre de la banque.

Le dispositif d'hybridation 1 élabore une sortie hybride SH (« Navigation de référence ») correspondant aux mesures inertielles PPVI calculées par la plateforme virtuelle 2 et corrigées par un vecteur de stabilisation dC présentant autant de composantes que les vecteurs de correction estimés par les filtres de Kalman.

Dans le document EP1801539 A discuté en introduction, les corrections à appliquer aux mesures inertielles sont issues d'un seul filtre. Ainsi, le vecteur de stabilisation est égal, dans toutes ses composantes, au vecteur de correction estimé par le filtre de Kalman sélectionné.

L'invention adopte une démarche différente en élaborant le vecteur de stabilisation composante par composante, et en utilisant pour chaque composante l'ensemble des filtres de Kalman. Le dispositif 1 selon l'invention comporte à cet effet un module d'élaboration de la correction 4 configuré pour élaborer chacune des composantes dC[état] du vecteur de stabilisation dC en fonction de l'ensemble des composantes correspondantes dX0[état]-dXn[état] des vecteurs de correction dX0-dXn.

Selon un mode de réalisation possible de l'invention, le module d'élaboration de la correction 4 est configuré, pour chaque composante dC[état] du vecteur de stabilisation dC, de manière :
- à analyser le signe de l'ensemble des composantes correspondantes dX0[état]-dXn[état] des vecteurs de correction estimés par les filtres de Kalman ; et
- lorsque l'ensemble de ces composantes correspondantes ne sont pas de même signe, à élaborer une composante de valeur nulle (dC[état] =0) pour le vecteur de stabilisation ;
- lorsque l'ensemble de ces composantes dX0[état]-dXn[état] sont de même signe, à élaborer une composante de valeur non nulle pour le vecteur de stabilisation, déterminée en fonction de la valeur de chacune de ces composantes dX0[état]-dXn[état].

Le module d'élaboration de la correction 4 est par exemple configuré de manière à ce que la valeur non nulle de la composante du vecteur de stabilisation dC[état] corresponde au minimum de l'ensemble des composantes correspondantes dX0[état]-dXn[état] des vecteurs de correction lorsque ces composantes dX0[état]-dXn[état] sont toutes positives, et corresponde au maximum de l'ensemble des composantes dX0[état]-dXn[état] des vecteurs de correction lorsque ces composantes dX0[état]-dXn[état] sont toutes négatives.

En l'absence de panne satellite, les composantes dX[état] des corrections élaborées par chacun des filtres forment globalement un nuage de points homogène. Dans ce cas, on choisit typiquement dC[état] parmi l'une des valeurs des dX[état], par exemple la plus faible.

Considérons à titre d'exemple un récepteur GPS à 10 canaux. Si les 10 sous-filtres, y compris celui qui exclurait une panne satellite éventuelle, indiquent une correction d'altitude d'au moins +1 m, on peut prendre en compte cette correction dans le calcul de la position optimale, car si la correction d'un mètre est proposée par tous les filtres cela veux dire que cette correction n'est pas dû à une panne satellite mais bien à une dérive de la position de la plate-forme virtuelle inertielle.

En présence d'une panne satellite, le biais ou la rampe sur la pseudo-distance va polluer le calcul de la position optimale de tous les filtres sauf un (celui qui exclut la panne satellite). On s'attend alors à ce que toutes les solutions de navigation sauf une dérivent à tel point qu'il y ait contradiction entre les corrections (« dX[état] ») des N-1 filtres pollués et celle proposée par le filtre qui exclut la pseudo-distance erronée. La solution proposée dans ce cas est de choisir de ne pas corriger la navigation de référence(« dC[état] = 0 »).

On peut toutefois imaginer une panne satellite d'amplitude suffisamment faible ou une géométrie de satellite particulièrement mauvaise qui retarderait ou masquerait l'apparition de cette contradiction. Il est à cet égard important de rappeler que par allocation des pseudo-distances reçues, il y a toujours une correction qui est intègre parmi celles proposées par l'ensemble des filtres de la banque de filtres. Et le choix de la commande de valeur absolue minimale conditionnée par la cohérence des signes des corrections permet d'assurer de ne pas introduire de pollution due à une panne satellite.

Par ailleurs, les équations d'hybridation sont linéarisées pour chaque filtre à sa position optimale propre (via le dispositif de calcul 8 et le soustracteur 9). Cette position optimale n'étant pas affectée par la commande de rebouclage, l'hybridation n'est pas affectée par la commande de rebouclage.

En variante au choix de la valeur minimale en valeur absolue, le module d'élaboration de la correction 4 peut être configuré de manière à ce que la valeur non nulle de la composante du vecteur de stabilisation dC[état] corresponde à la moyenne des P plus petites composantes correspondantes dX0[état]-dXn[état] des vecteurs de correction, prises en valeur absolue (avec P par exemple égal à 2)

Selon encore une autre variante, le module d'élaboration de la correction 4 peut être configuré de manière à ce que la valeur non nulle de la composante du vecteur de stabilisation dC[état] corresponde à la moyenne de l'ensemble des composantes dX0[état]-dXn[état] des vecteurs de correction lorsque celles-ci sont de même signe.

Le vecteur de stabilisation élaboré conformément à l'invention permet de minimiser les erreurs estimées pour tous les filtres.

Cette élaboration du vecteur de stabilisation s'avère judicieuse dans la mesure où elle n'est pas contrainte par un mécanisme de détection et d'exclusion des pannes (mécanisme FDE selon la terminologie anglo-saxonne « Fault Détection and Exclusion ») et où la validité des rayons de protection n'est pas contrainte par un FDE. Dans le cadre de l'invention, la plate-forme virtuelle et la banque de filtres seront polluées par une panne satellite, mais pas le filtre qui exclut le satellite en panne.

Le vecteur de stabilisation dC ainsi élaboré par le module 4 permet de corriger, avec un retard 11, les mesures inertielles PPVI calculées par la plateforme virtuelle, en utilisant de manière classiquement connue en soi un soustracteur 10.

Ainsi l'invention propose l'emploi d'une seule plateforme virtuelle stabilisée par une commande dC permettant de maintenir l'erreur de la plateforme 2 dans les hypothèses de linéarité des filtres de la banque 3 qui est élaborée à partir de l'ensemble des vecteurs d'états dXi de la banque de filtres.

Dans le cadre d'un dispositif d'hybridation en boucle fermée, la sortie hybride SH est rebouclée à l'entrée de la plateforme virtuelle.

Par ailleurs, comme cela est représenté sur la figure 1, le vecteur de stabilisation dC peut être appliqué à l'entrée de l'ensemble des filtres de la banque de filtres. De telle manière, les filtres de Kalman s'ajustent en soustrayant à leur estimation (vecteur de correction dX) la correction élaborée dC, et sont ainsi maintenus cohérents de la plateforme virtuelle. On vient ainsi diminuer chacune des composantes dX0[état]-dXn[état] de tous les filtres par la composante correspondante dC[état] de la correction élaborée. - Selon un mode de réalisation possible de l'invention, le dispositif 1 comporte en outre un banc de sommateurs 7, chaque sommateur étant positionné en sortie de la banque de filtres pour ajouter à chaque vecteur de correction la sortie hybride.

On relèvera que la navigation de référence (sortie hybride SH) élaborée par le dispositif 1 sert uniquement en interne. Ce sont ainsi les informations délivrées en sortie du banc de sommateurs 7 qui fournissent les solutions de navigation optimales (solution de navigation hybride principale « NAV INS/GPS 0 » issue du filtre de Kalman principal, solution de navigation hybride secondaire « NAV INS/GPS i » issue du filtre de Kalman secondaire d'indice i).

L'architecture proposée par l'invention présente les avantages suivants.
- elle ne nécessite l'intégration que d'une seule plateforme virtuelle ;
- le recalage de la plateforme virtuelle est réalisé à la fréquence des filtres de Kalman ;
- en l'absence de panne satellite, cette architecture présente des performances identiques à celles de l'architecture présentée dans le document EP1801539 A ;
- le calcul de la commande de stabilisation de la plate forme n'est pas contraint par un procédé de détection de panne ;
- le filtre n'utilisant pas le satellite en panne n'est pas pollué par la panne.

L'invention n'est par ailleurs pas limitée à un dispositif d'hybridation selon son premier aspect, mais s'étend également à un procédé d'élaboration d'un vecteur de stabilisation destiné à corriger des mesures inertielles calculées par une plateforme virtuelle d'un dispositif d'hybridation, caractérisé en ce que le vecteur de stabilisation est élaboré composante par composante et en ce que chaque composante dC[état] du vecteur de stabilisation dC est élaborée en fonction de l'ensemble des composantes correspondantes dX0[état]-dXn[état] de vecteurs de correction dX0-dXn estimés par un banc de filtres de Kalman.

## Revendications

1. Dispositif d'hybridation (1) comportant une plateforme virtuelle (2), un banc (3) de filtres de Kalman estimant chacun un vecteur de correction (dX0-dXn), le dispositif délivrant une sortie hybride (SH) correspondant à des mesures inertielles (PPVI) calculées par la plateforme virtuelle (2) et corrigées par un vecteur de stabilisation (dC), **caractérisé en ce qu'**il comporte
un module d'élaboration de la correction (4) configuré pour élaborer chacune des composantes (dC[état]) du vecteur de stabilisation (dC) en fonction de l'ensemble des composantes correspondantes (dX0[état]-dXn[état]) des vecteurs de correction (dX0-dXn),
le module d'élaboration de la correction (4) étant configuré, pour chaque composante du vecteur de stabilisation (dC[état]), de manière :
- à analyser le signe de l'ensemble des composantes correspondantes (dX0[état]-dXn[état]) des vecteurs de correction ;
- lorsque l'ensemble de ces composantes correspondantes ne sont pas de même signe, à élaborer une composante de valeur nulle (dC[état] =0) pour le vecteur de stabilisation ;
- lorsque l'ensemble de ces composantes correspondantes sont de même signe, à élaborer une composante de valeur non nulle pour le vecteur de stabilisation, déterminée en fonction de la valeur de chacune de ces composantes des vecteurs de correction.

2. Dispositif selon la revendication 1, dans lequel la valeur non nulle de la composante du vecteur de stabilisation (dC[état]) correspond au minimum de l'ensemble des composantes correspondantes (dX0[état]-dXn[état]) des vecteurs de correction lorsque l'ensemble de ces composantes correspondantes sont positives, et correspond au maximum de l'ensemble des composantes correspondantes des vecteurs de correction lorsque l'ensemble de ces composantes correspondantes sont négatives.

3. Dispositif selon l'une des revendications 1 ou 2, dans lequel la valeur non nulle de la composante du vecteur de stabilisation correspond à la moyenne des P plus petites composantes correspondantes (dX0[état]-dXn[état]) des vecteurs de correction, prises en valeur absolue, P étant par exemple égal à 2.

4. Dispositif selon l'une des revendications précédentes, dans lequel le vecteur de stabilisation est appliqué à l'entrée de l'ensemble des filtres de la banque de filtres.

5. Dispositif selon l'une des revendications précédentes, dans lequel la sortie hybride est rebouclée à l'entrée de la plateforme virtuelle.

6. Dispositif selon l'une des revendications précédentes, dans lequel le banc de filtres de Kalman (3) comprend un filtre de Kalman principal (5) recevant les mesures des signaux émis par n satellites, et n filtres de Kalman secondaires (6i, 6n) recevant chacun les mesures des signaux émis par les N satellites à l'exclusion d'un satellite.

7. Dispositif selon l'une des revendications précédentes, comprenant en outre un banc de sommateurs (7) positionné en sortie de la banque de filtres pour ajouter à chaque vecteur de correction la sortie hybride.

8. Procédé d'élaboration d'un vecteur de stabilisation destiné à corriger des mesures inertielles calculées par une plateforme virtuelle d'un dispositif d'hybridation, **caractérisé en ce que**
le vecteur de stabilisation est élaboré composante par composante et **en ce que** chaque composante (dC[état]) du vecteur de stabilisation (dC) est élaborée en fonction de l'ensemble des composantes correspondantes (dX0[état]-dXn[état]) de vecteurs de correction (dX0-dXn) estimés par un banc de filtres de Kalman,
ledit procédé comprenant les étapes consistant à:
- analyser le signe de l'ensemble des composantes correspondantes (dX0[état]-dXn[état]) des vecteurs de correction ;
- lorsque l'ensemble de ces composantes correspondantes ne sont pas de même signe, élaborer une composante de valeur nulle (dC[état] =0) pour le vecteur de stabilisation ;
- lorsque l'ensemble de ces composantes correspondantes sont de même signe, élaborer une composante de valeur non nulle pour le vecteur de stabilisation, déterminée en fonction de la valeur de chacune de ces composantes des vecteurs de correction.

## Patentansprüche

1. Hybridisierungsvorrichtung (1), umfassend eine virtuelle Plattform (2), eine Kalman-Filterbank (3), die jeweils einen Korrekturvektor (dX0-dXn) einschätzen, wobei die Vorrichtung einen hybriden Ausgang (SH) bereitstellt, der Inertialmessungen (PPVI) entspricht, welche von der virtuellen Plattform (2) berechnet und von einem Stabilisierungsvektor (dC) korrigiert werden, **dadurch gekennzeichnet, dass** sie umfasst
ein Ausarbeitungsmodul der Korrektur (4), das konfiguriert ist, um jeweils Komponenten (dC[state]) des Stabilisierungsvektors (dC) in Abhängigkeit von der Gruppe der entsprechenden Komponenten (dX0[state] - dXn[state]) der Korrekturvektoren (dX0-dXn) auszuarbeiten,
wobei das Ausarbeitungsmodul der Korrektur (4) für jede Komponente des Stabilisierungsvektors (dC[state]) derart konfiguriert ist, dass:
- das Zeichen der Gruppe der entsprechenden Komponenten (dX0[state] - dXn[state]) der Korrekturvektoren analysiert wird;
- wenn die Gruppe dieser entsprechenden Komponenten nicht dasselbe Zeichen hat, eine Komponente mit dem Wert null (dC[state]=0) für den Stabilisierungsvektor ausgearbeitet wird;
- wenn die Gruppe dieser entsprechenden Komponenten dasselbe Zeichen hat, eine Komponente mit dem Wert null für den Stabilisierungsvektor ausgearbeitet wird, die in Abhängigkeit von dem Wert jeder dieser Komponenten der Korrekturvektoren bestimmt wird.

2. Vorrichtung gemäß Anspruch 1, bei der der Wert nicht null der Komponente des Stabilisierungsvektors (dC[state]) dem Minimum der Gruppe der entsprechenden Komponenten (dX0[state] - dXn[state]) der Korrekturvektoren entspricht, wenn die Gruppe dieser entsprechenden Komponenten positiv ist, und entspricht dem Maximum der Gruppe der entsprechenden Komponenten der Korrekturvektoren, wenn die Gruppe dieser entsprechenden Komponenten negativ ist.

3. Vorrichtung gemäß Anspruch 1 oder 2, bei der der Wert nicht null der Komponente des Stabilisierungsvektors dem Durchschnitt der P kleinsten entsprechenden Komponenten (dX0[state] - dXn[state]) der Korrekturvektoren entspricht, die als absoluter Wert genommen sind, wobei P z. B. gleich 2 ist.

4. Vorrichtung gemäß einem der voranstehenden Ansprüche, bei dem der Stabilisierungsvektor am Eingang der Gruppe der Filter der Filterbank angewendet wird.

5. Vorrichtung gemäß einem der voranstehenden Ansprüche, bei der der hybride Ausgang am Eingang der virtuellen Plattform wieder als Schleife verbunden ist.

6. Vorrichtung gemäß einem der voranstehenden Ansprüche, bei der die Kalman-Filterbank (3) einem Kalman-Hauptfilter (5) entspricht, der die Messungen der Signale aufnimmt, die von n Satelliten ausgegeben werden, und n sekundäre Kalman-Filter (61, 6n), die jeweils die Messungen der Signals empfangen, die von den N Satelliten unter Ausschluss eines Satelliten ausgegeben werden.

7. Vorrichtung gemäß einem der voranstehenden Ansprüche, umfassend darüber hinaus eine Summiererbank (7), die am Ausgang der Filterbank positioniert ist, um jedem Korrekturvektor den hybriden Ausgang hinzuzufügen.

8. Ausarbeitungsverfahren eines Stabilisierungsvektors, das zur Korrektur der Inertialmessungen bestimmt ist, die durch eine virtuelle Plattform einer Hybridisierungsvorrichtung berechnet werden, **dadurch gekennzeichnet, dass**
der Stabilisierungsvektor Komponente für Komponente ausgearbeitet wird und dass jede Komponente (dC[state]) des Stabilisierungsvektors (dC) in Abhängigkeit von der Gruppe der entsprechenden Komponenten (dX0[state] - dXn[state]) von Korrekturvektoren (dX0-dXn) ausgearbeitet wird, die von einer KalmanFilterbank eingeschätzt werden,
wobei das genannte Verfahren die Stufen umfasst, bestehend in:
- der Analyse des Zeichens der Gruppe der entsprechenden Komponenten (dX0[state] - dXn[state]) der Korrekturvektoren;
- wenn die Gruppe dieser entsprechenden Komponenten nicht dasselbe Zeichen hat, Ausarbeitung einer Komponente mit dem Wert null (dC[state]=0) für den Stabilisierungsvektor;
- wenn die Gruppe dieser entsprechenden Komponenten dasselbe Zeichen hat, Ausarbeitung einer Komponente mit dem Wert null für den Stabilisierungsvektor, die in Abhängigkeit von dem Wert jeder dieser Komponenten der Korrekturvektoren bestimmt wird.

## Claims

1. A hybridization device (1) including a virtual platform (2), a bank (3) of Kalman filters each estimating a correction vector (dX0-dXn), the device delivering a hybrid output (SH) corresponding to inertial measurements (PPVI) calculated by the virtual platform (2) and corrected by a stabilization vector (dC), **characterised in that** it includes
a correction setting module (4) configured to set each of the components (dC[state]) of the stabilization vector (dC) as a function of all the corresponding components (dX0[state]-dXn[state]) of the correction vectors (dX0-dXn),
the correction setting module (4) being configured, for each component of the stabilization vector (dC[state]), so as to:
- analyse the sign of all the corresponding components (dX0[state]-dXn[state]) of the correction vectors;
- when all the corresponding components are not of the same sign, setting a component having a null value (dC[state]=0) for the stabilization vector;
- when all the corresponding components are of the same sign, setting a component having a non-null value for the stabilization vector, determined as a function of the value of each of these components of the correction vectors.

2. The device according to claim 1, wherein the non-null value of the component of the stabilization vector (dC [state]) corresponds to the minimum of all the corresponding components (dX0[state]-dXn[state]) of the correction vectors when all these corresponding components are positive, and corresponds to the maximum of all the corresponding components of the correction vectors when all these corresponding components are negative.

3. The device according to one of claims 1 or 2, wherein the non-null value of the component of the stabilization vector corresponds to the mean of the P smallest corresponding components (dX0[state]-dXn[state]) of the correction vectors, taken in absolute value, P being for example equal to 2.

4. The device according to one of the preceding claims, wherein the stabilization vector is applied to the input of all the filters of the filter bank.

5. The device according to one of the preceding claims, wherein the hybrid output is fed back to the input of the virtual platform.

6. The device according to one of the preceding claims, wherein the bank of Kalman filters (3) comprises a primary Kalman filter (5) receiving the measurements from signals emitted by n satellites, and n secondary Kalman filters (6i, 6n) each receiving the measurements from signals emitted by the N satellites excluding one satellite.

7. The device according to one of the preceding claims, further comprising a bank of summers (7) positioned at the output of the filter bank to add the hybrid output to each correction vector.

8. A method for setting a stabilization vector intended to correct inertial measurements calculated by a virtual platform of a hybridization device, **characterised in that**
the stabilization vector is set component by component and **in that** each component (dC[state]) of the stabilization vector (dC) is set as a function of all the corresponding components (dX0[state]-dXn[state]) of the correction vectors (dX0-dXn) estimated by a bank of Kalman filters,
said method comprising the steps of:
- analysing the sign of all the corresponding components (dX0 [state]-dXn [state]) of the correction vectors;
- when all these corresponding components are not of the same sign, setting a component having a null value (dC[state]=0) for the stabilization vector;
- when all these corresponding components are of the same sign, setting a component having a non-null value for the stabilization vector, determined as a function of the value of each of these components of the correction vectors.
